# EUROPÄISCHE PATENTSCHRIFT

(11) **EP 0 861 007 B1**
(45) Veröffentlichungstag und Bekanntmachung des Hinweises auf die Patenterteilung: **16.06.2004**
(21) Anmeldenummer: 98102923.4
(22) Anmeldetag: 19.02.1998
(51) Int. Cl.: H04Q 3/62, H04M 3/54, H04M 3/48

(54) **Verfahren zur Anrufleitweglenkung in einem Kommunikationssystem**
Method for call routing in a communications system
Procédé d'acheminement d'appels dans un système de communication

(30) Priorität: 20.02.1997 DE 19706782
(43) Veröffentlichungstag der Anmeldung: 26.08.1998
(73) Patentinhaber: SIEMENS AKTIENGESELLSCHAFT, 80333 München (DE)
(72) Erfinder: Vanlandeghem, Marc, 9800 Deinze (BE)

(56) Entgegenhaltungen:
- EP-A- 0 520 483
- US-A- 5 109 405

## Beschreibung

Kommunikationssyteme dienen zur Verbindung von Endgeräten untereinander und zur Verbindung solcher Endgeräte mit an andere Kommunikationsnetze, z.B. öffentliche Netze angeschlossenen Endgeräten. Unabhängig vom unterschiedlichen Komplexitätsgrad solcher Kommunikationssysteme besteht ein Kommunikationssystem im Prinzip aus einer Vielzahl vermittlungstechnischer Funktionseinheiten und einer programmierbaren Datenverarbeitungseinrichtung mit einem Systemspeicher und wenigstens einem Systemprozessor. Dieser steuert die Funktionseinheiten und überwacht alle vermittlungstechnischen Abläufe. Zu diesem Zweck wird die Datenverarbeitungseinrichtung mit Informationen über den Betriebszustand der Funktionseinheiten und über Zustandsänderungen, insbesondere über Eingaben an den angeschlossenen Endgeräten, informiert. Es kann deshalb bei Bedarf umgehend entsprechende Steueranweisungen und Meldungen erstellen und ausgeben.

Generell zeichnen sich derartige modern konzipierte Kommunikationssystem dadurch aus, daß sie nicht nur zur eigentlichen Vermittlungssteuerung, sondern auch zu einer Steuerung bzw. Realisierung zusätzlicher, über den eigentlichen Vermittlungsvorgang hinausgehender Steuervorgänge befähigt sind. Solche zusätzlichen Funktionen werden im allgemeinen als Leistungsmerkmale bezeichnet. Insbesondere können durch den Anschluß digitaler Fernsprechendgeräte im Rahmen des Kommunikationsdienstes "Sprache" zusätzliche Leistungsmerkmale geboten werden.

Die US-Patentschrift US 5,109,405 beschreibt ein Verfahren, bei dem ein Teilnehmer eines Kommunikationssystems festlegen kann, dass nur für bestimmte Anrufer die Möglichkeit besteht, ihn unmittelbar zu erreichen bzw. dass für bestimmte Anrufer die Anschaltung an ein Ansagesystem erfolgen soll. Der betreffende interne Teilnehmer hat bezüglich der unterschiedlichen Behandlung von an ihn gerichteten Verbindungswünschen die Möglichkeit, eine Liste mit den Identitätskennzeichen (z.B. Rufnummern) der davon betroffenen rufenden Teilnehmer zu erstellen. Anhand dieser Identitätskennzeichen wird entschieden, ob der eingehende Ruf durchgestellt oder umgeleitet wird.

In den Fällen, in denen insbesondere im internen Verkehr von Teilnehmern eines Nebenstellenkommunikationssystems aus den unterschiedlichsten Gründen eine Verbindung zu einem gewünschten Teilnehmer nicht zustande kommt, können durch einen rufenden Teilnehmer Prozeduren eingegeben werden, durch die automatisch unter bestimmten Voraussetzungen ein erneuter Verbindungsaufbauversuch gestartet wird. Beispiel hierfür ist die Eingabe eines Rückrufauftrages durch den ursprünglich rufenden Teilnehmer. Bei vergeblichen Verbindungsversuchen zu einem Endgerät eines externen Teilnehmers, der also beispielsweise ein Teilnehmer eines anderen Nebenstellenkommunikationssystem oder eines öffentlichen Kommunikationsnetzes ist, gibt es keine einfache Möglichkeit die Wahrscheinlichkeit für das Zustandekommen einer Verbindung zu erhöhen.

Es ist die Aufgabe der Erfindung, eine solche Möglichkeit unabhängig von dem Grund für die Nichterreichbarkeit des gewünschten externen Teilnehmers zu schaffen.

Die Lösung dieser Aufgabe erfolgt ausgehend von einem Kommunikationssystem mit den Merkmalen des Patentanspruches 1. Das Erfindungswesentliche besteht darin, daß es einem Nebenstellenteilnehmer ermöglicht wird, die Rufnummer eines externen Teilnehmers, zu dem keine von ihm gewünschte Verbindung zustande gekommen ist, zusammen mit einer seine eigene Teilnehmerstelle bzw. sein Endgerät definierenden Kennung in eine Liste einzuspeichern. Unter der Voraussetzung, daß bei einer mit Bezug auf das Nebenstellenkommunikationssystem ankommenden Verbindung die vollständige Rufnummer des jeweils rufenden externen Teilnehmers zur Verfügung steht, wird grundsätzlich überprüft, ob diese aktuelle Rufnummer in dieser Liste enthalten ist. Trifft dies zu, so wird der externe Teilnehmer nicht zu dem von ihm eigentlich gewünschten Nebenstellenteilnehmer sondern zunächst zu demjenigen Teilnehmer, der den Eintrag in die Liste vorgenommen hat, vermittelt. Diese priorisierte Zuordnung kann beispielsweise im Sinne einer Umleitung vorgenommen werden. Der Eintrag in die Liste ist insbesondere für externe Teilnehmer sinnvoll, von denen bekannt ist, daß sie häufiger Gesprächsverbindungen zu Teilnehmern dieses Nebenstellenkommunikationsystems aufbauen.

Gemäß einer Weiterbildung der Erfindung wird auch die Rufnummer des ursprünglich von dem externen Teilnehmer gewünschten Zielteilnehmers abgespeichert. Damit besteht dann erfindungsgemäß die Möglichkeit, vollautomatisch nach Beendigung der zwangsweise zugeteilten Gesprächsverbindung dem externen Teilnehmer diesen ursprünglichen Zielteilnehmer zu vermitteln.

Weitere vorteilhafte Ausgestaltungen der Erfindung sind den restlichen Unteransprüchen zu entnehmen.

Die Erfindung wird im Folgenden anhand eines figürlich dargestellten Ausführungsbeispiels erläutert.

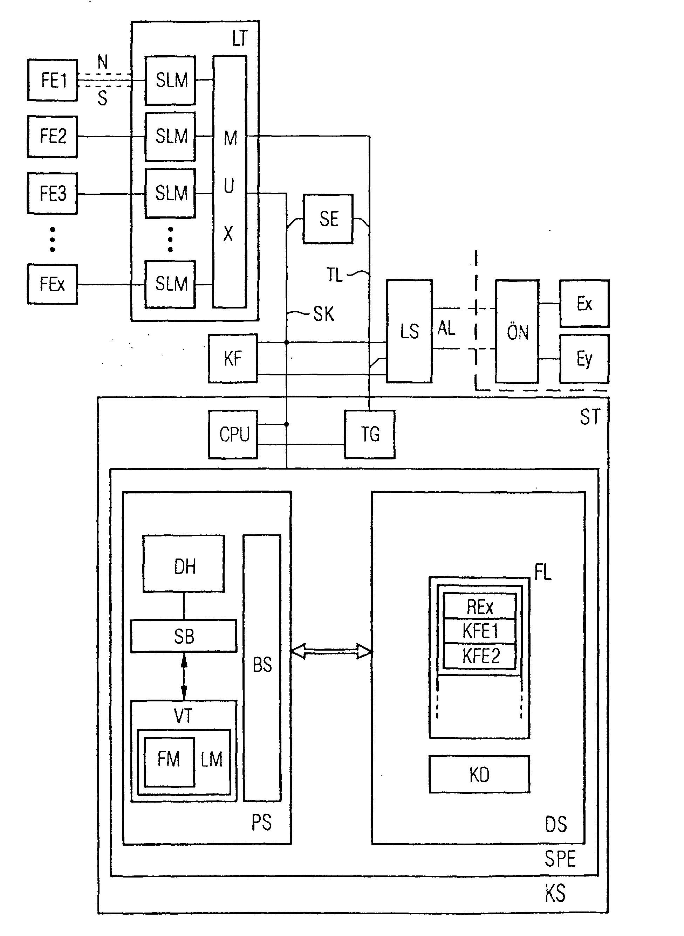

Die einzige Figur zeigt dabei in schematischer Darstellung ein Kommunikationssystem mit vermittlungstechnischen Komponenten und daran angeschlossenen Endgeräten, sowie externe Endgeräte.

In der Figur ist als Blockschaltbild die Struktur eines programmgesteuerten privaten Kommunikationssystems schematisch dargestellt. Es sind lediglich die zum Verständnis der Erfindung notwendigen Komponenten gezeigt. Zentraler Bestandteil des privaten Kommunikationssystems KS ist ein zentrales Koppelfeld KF, über das Endgeräte - von denen Fernsprechendgeräte FE1-FEx schematisch angedeutet sind - miteinander bzw. mit zu einem öffentlichen Kommunikationssystem ÖN führenden Leitungen AL verbindbar sind. Das zentrale Koppelfeld steht unter dem Steuereinfluß einer zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt sein. Der Zugriff zu einer Amtsleitung AL erfolgt über die Schnittstelle LS. Diese Schnittstelle beinhaltet beispielsweise einen ISDN-Teil, der z.B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems vorhanden ist.

Im Kommunikationssystem KS sind Leitungsanschlußeinrichtungen, symbolisiert durch die Leitungsanschlußeinrichtung LT vorhanden. Diese enthalten jeweils Teilnehmeranschlußmodule SLM. Die Teilnehmeranschlußmodule sind über Teilnehmeranschlußleitungen ASL jeweils mit einem der Kommunikationsendgeräte FE verbunden. Sie sind grundsätzlich entweder für den Anschluß von analogen oder für den Anschluß von digitalen Kommunikationsendgeräten vorgesehen. Die Nachrichtenübertragung erfolgt bei digitalen Kommunikationsendgeräten über Nachrichtenkanäle N und die Signalisierung wird über einen zusätzlichen Kanal S übermittelt. Die vom jeweiligen Kommunikationsendgerät gelieferten digitalen Sprachinformationen werden über eine Multiplexeinrichtung MUX zum Koppelfeld KF weitergegeben. Vermittlungstechnisch gesteuert werden die Leitungsanschlußeinrichtungen LT von der Systemsteuerung ST. Jede Leitungsanschlußeinrichtung ist über einen Signalisierungskanal SK mit der Systemsteuerung verbunden. Über diesen Signalisierungskanal werden die Informationen z.B. mit Hilfe der bekannten HDLC-Übermittlungsprozedur ausgetauscht. Die durch die Systemsteuerung angebotenen Taktsignale werden über eine Taktleitung TL an die Leitungsanschlußeinrichtungen verteilt. Durch die Einheit TG wird symbolisiert, daß durch sie die Taktsignale zur Verfügung gestellt werden.

Der Systemprozessor CPU der Systemsteuerung ST hat Zugriff zu den in der Speichereinrichtung SPE abgelegten Informationen. Diese Speichereinrichtung ist grundsätzlich in den Programmspeicher PS und in den Datenspeicher DS unterteilt. Im Programmspeicher PS sind unter anderem das Betriebssystem BS und die zu ihm bezüglich der Peripherietechnik, der Betriebstechnik, der Sicherheitstechnik und der Vermittlungstechnik gehörenden Programme abgespeichert. Das Betriebssystem BS koordiniert die für das Kommunikationssystem KS typische Vielzahl von quasi gleichzeitig anfallenden und auch zu erledigenden Einzelaufgaben. Seine wesentliche Aufgabe besteht darin, in Abhängigkeit von eingetroffenen oder innerhalb der Systemsteuerung gebildeten Anreize dem Systemprozessor CPU, der die eigentliche ausführende Einheit der Systemsteuerung ist, Verarbeitungsvorschriften zuzuweisen. Diese beinhalten eine Reaktion auf die betreffenden Anreize. Für jeden möglichen Anreiz steht deshalb in der Systemsteuerung eine anreizindividuelle Verarbeitungsvorschrift zur Verfügung, die als jeweiliges Programmodul im Programmspeicher PS hinterlegt ist. In der Figur ist das vermittlungstechnische Programmodul VT stellvertretend für die anderen Module angedeutet. Mit LM ist ein der Vermittlungstechnik zugeordnetes Modul bezeichnet, das symbolisch für die zur Realisierung der einzelnen Leistungsmerkmale vorhandenen Programmodule steht.

In dem Speicherteil DS ist als Teileinheit der Datenbasis der Bereich KD angedeutet. In diesem Speicherbereich sind die Kundendaten, wie z.B. die den einzelnen Endgeräten FE1...FEx zugeteilten Berechtigungen und die Systemkonfiguration abgelegt. Der Datenspeicher DS dient unter anderem der Aufnahme von temporären Daten zur Programmablaufsteuerung. Es werden in ihm auch Daten übernommen, die während eines durch ein Endgerät initiierten Verbindungsaufbaus oder bei der Inanspruchnahme eines Dienstes bzw. eines Leistungsmerkmals abgefragt werden. In einem nicht gezeigten endgeräteindividuellen Speicherabschnitt werden sämtliche auf das jeweilige Endgerät bezogene Daten abgelegt. Es ist also daraus sowohl der aktuelle vermittlungstechnische Zustand - beispielsweise ob der betreffende Teilnehmer den Handapparat abgehoben hat, ob er gerufen wird usw. - als Speicherinformation für die Steuerung entnehmbar. Ebenso werden in vorgegebenen Speicherplätzen die jeweils in Anspruch genommenen Dienste bzw. Leistungsmerkmale abgespeichert. Diese Speicherabschnitte sind als dynamische Datenbasis für die einzelnen Endgeräte anzusehen.

Für jedes dieser Endgeräte ist zu seiner Steuerung ein an das jeweilige Endgerät angepaßtes Leitungsprogrammodul vorhanden, das in Zuordnung zu dem Programmspeicher PS durch das Modul DH symbolisiert ist. Jedes dieser vorhandenen Module DH bietet eine systemeinheitliche Schnittstelle zur vermittlungstechnischen Strukturebene, die durch das Vermittlungsprozedur-Programmmodul VT repräsentiert ist. Der Informationsaustausch zwischen den beiden genannten Struktur- bzw. Steuerungsebenen erfolgt mittels definierten Meldungen, die beispielsweise über die angedeutete Software-Bus-Struktur SB übertragen werden. Diese kann als integraler Bestandteil des Betriebssystems angesehen werden.

Alle oder auch nur bestimmte Teilnehmer des Kommunikationssystems KS haben nun die Möglichkeit, Anrufe eines externen Teilnehmers, die eigentlich nicht für sie bestimmt sind, an ihr Endgerät heranzuziehen. Dies ist immer dann sinnvoll, wenn es sich um externe Teilnehmer handelt, zu denen wiederholt ergebnislose Gesprächsverbindungaufbauversuche vorgenommen wurden. Es erfolgte also beispielsweise durch den gewünschten externen Teilnehmer keine Gesprächsannahme der Teilnehmer wurde besetzt vorgefunden oder er reagierte nicht auf Nachrichten, die für ihn in einem entsprechenden Sprachspeicher hinterlegt wurden. Bei einem solchen externen Teilnehmer kann es sich um den Teilnehmer eines anderen Nebenstellenkommunikationssystems oder um einen an ein öffentliches Kommunikationssystem angeschlossenen Teilnehmer handeln. Es wird z.B. angenommen, daß vom Teilnehmer des Endgerätes FE1 vergeblich versucht wurde, eine Gesprächsverbindung zum externen Teilnehmerendgerät Ex, das an das öffentliche Netz ÖN angeschlossen ist, zu erhalten. Der vergeblich rufende Teilnehmer, z.B. der Teilnehmer des Endgerätes FE1, hat die Möglichkeit, mittels einer vorgegebenen Prozedur die Rufnummer des von ihm gewünschten Teilnehmers bzw. die des zugeordneten Endgerätes Ex in eine zentrale Liste FL abzuspeichern. Die Prozedur kann beispielsweise durch die Betätigung einer entsprechenden Funktionstaste oder durch die Einwahl einer vorgegebenen Ziffernkombination mit der nachfolgenden Einwahl der Rufnummer des externen Teilnehmers bewirkt werden. Diese durch das Bezugszeichen REx symbolisierte Rufnummer wird demnach in eine freie Zeile des für diese Liste FL insgesamt vorgesehenen Speicherbereiches eingeschrieben. Gleichzeitig erfolgt die Einspeicherung der daran unmittelbar gekoppelten Kennung KFE1 für das Endgerät FE1 des internen Teilnehmers. Eine derartige Einspeicherung durch diesem Teilnehmer ist insbesondere dann sinnvoll, wenn ihm bekannt ist, daß der von ihm gewünschte Gesprächspartner in der Regel andere an das Kommunikationssystem KS angeschlossene Endgeräte anruft. In modernen Kommunikationssystemen wird bei der Abgabe einer Wahlinformation eines daran angeschlossenen Endgerätes die vollständige Rufnummer dieses Endgerätes zum Zielkommunikationssystem übermittelt. Unter der Voraussetzung einer ISDN-Verbindung wird die Rufnummer eines externen Endgerätes über den Signalisierungskanal zum Zielkommunikationssystem übertragen. Diese übermittelte Rufnummer wird dann z.B. auf dem Display des gewünschten Zielteilnehmers bereits vor der eigentlichen Durchschaltung der Gesprächsverbindung angezeigt.

Es sei angenommen, daß der Teilnehmer des externen Endgerätes Ex einen Verbindungsaufbauversuch zum internen Teilnehmer des Endgerätes FE2 unternimmt. Die den internen Teilnehmer (Endgerät FE2) kennzeichnenden Wahlinformationen werden im Zielsystem KS in einem vorgegebenen Bereich des Arbeitsspeichers zunächst zwischengespeichert, um sie grundsätzlich für die in diesem Zusammenhang erforderlichen Folgefunktionen zur Verfügung zu haben. Die bei einem ankommenden Verbindungswunsch voraussetzungsgemäß übermittelte Rufnummer des rufenden externen Teilnehmers - in unserem Beispiel der Teilnehmer des Endgerätes Ex - dient nun grundsätzlich u.a. dazu, die Liste FL daraufhin zu überprüfen, ob diese übermittelte Rufnummer darin enthalten ist. In dem gewählten Beispiel trifft dies zu, da vom Teilnehmer des Endgerätes FE1 die Eintragung dieser Rufnummer REx, wie bereits beschrieben, veranlaßt wurde. Dieses positive Vergleichsergebnis hat nun zur Folge, daß zunächst die zwischengespeicherte Rufnummer bzw. die daraus ermittelte Kennung des vom externen Teilnehmer angewählten internen Teilnehmers des Endgerätes FE2 in Zuordnung zu den Einträgen REx und KFE1 in diese Liste übernommen wird. Dies ist durch den Eintrag KFE2 symbolisiert. Durch die Steuerung wird in einem solchen Fall der ankommende Verbindungswunsch nicht dem ursprünglich damit angewählten Teilnehmer des Endgerätes FE2, sondern dem Teilnehmer des Endgerätes FE1 vermittelt. Es wird also zunächst zwangsweise dieser Teilnehmer gerufen und bei Annahme des Rufes die Verbindung zu dem externen Teilnehmer, den dieser über die Kennung REx in die Liste FL eingetragen hat, durchgeschaltet. Wird der Ruf durch diesen priorisierten Teilnehmer nicht angenommen, so wird anschließend der eigentlich gewünschte Teilnehmer des Endgerätes FE2 gerufen. Die in diesem Zusammenhang notwendigen Abläufe werden durch ein entsprechend implementiertes Programmodul -symbolisiert durch das Modul FM- abgewickelt.

Kommt das durch den Teilnehmer des Endgerätes FE1 dringend gewünschte Gespräch auf diese Weise vollautomatisch zwangsweise zustande, so ist nach Beendigung dieses Gespräches eine Verbindung zu dem vom externen Teilnehmer ursprünglich gewünschten Teilnehmer des Endgerätes FE2 entweder vollautomatisch oder durch Vermittlung des Teilnehmers des Endgerätes FE1 möglich. Diese Verbindungsherstellung kann im Rahmen einer bereits im System implementierten Verbindungsaufbauprozedur vorgenommen werden. Diese Verbindungsherstellung ist z.B. durch eine entsprechende Initiierung einer Umleitungsprozedur oder einer Rückrufprozedur zu realisieren. So kann beispielsweise die Verbindungsaufbauprozedur zum ursprünglich vorgesehen Zielteilnehmer im Sinne eines Rückrufes dadurch bewirkt werden, daß die Anschlußadressen des internen Zielteilnehmers und der jeweils belegten externen Leitung als die Adressen eines rufenden und eines rückrufenden Teilnehmers der entsprechenden Programmsteuerung für die Realisierung von Rückrufprozeduren übergeben werden. Nach Beendigung des zwangsweise zugeteilten Gespräches zu dem Teilnahme des Endgerätes FE1 wird nach Beendigung dieses Gespräches die belegte Leitung zum externen Teilnehmer zunächst in den Haltezustand überführt.

Die Verbindung zu dem ursprünglichen Zielteilnehmer des Endgerätes FE2 kann beispielsweise auch durch die Betätigung einer entsprechend vorgesehenen Funktionstaste vorgenommen werden. Es werden die gespeicherten Anschlußadressen bzw. die auf Grund der abgespeicherten Kennungen ermittelten Anschlußadressen zur Verbindungdurchschaltung als vermittlungstechnisch relevante Daten verwendet.

Die Verbindung zum ursprünglich gewünschten Zielteilnehmer könnte auch nach Beendigung der zwangsweise zugeteilten Gesprächsverbindung durch den begünstigten Teilnehmer im Rahmen einer Gesprächsübergabe vermittelt werden.

Nach Beendigung des zwangsweise zugeteilten Gespräches in unserem Beispiel zwischen dem Teilnehmer des Endgerätes FE1 und dem Endgerät Ex des externen Teilnehmers werden die diesbezüglich in der Liste FL abgespeicherten Daten gelöscht.

Grundsätzlich kann auch vorgesehen sein, daß in den Fällen, in denen eine Verbindung mit dem Endgerät FE1 des durch die zwangsweise Zuteilung der Gesprächsverbindung begünstigten Teilnehmers nicht zustande kommt - beispielsweise wenn dieses Endgerät besetzt oder das Endgerät nicht bedient wird - durch ein in der Systemsteuerung implementiertes Ablaufprogramm die Zuschaltung zu einem Sprachspeichersystem beispielsweise einem Voicemail-System vorgenommen wird. In diesen Sprachspeichersystem wird dann eine durch den begünstigten Teilnehmer FE1 eingegebene Nachricht ausgewählt und dem externen Teilnehmer übermittelt. Die jeweils aktuelle Sprachnachricht kann beispielsweise auf Grund der Rufnummerninformation des externen Teilnehmers, die auch an diese auszusendende Nachricht gekoppelt ist, bestimmt werden. Es wird damit die gezielte individuelle Aussendung einer vorab selektiv für diesen externen Teilnehmer hinterlegte Nachricht bewirkt.

## Patentansprüche

1. Verfahren für ein Kommunikationssystem (KS) zur Vermittlung von angeschlossenen Kommunikationsgeräten (FE1 .. Fex) untereinander und mit externen Kommunikationsendgeräten (Ex, Ey), bei dem eine die vermittlungstechnische Steuerung und Koordinierung durchführende Systemsteuerung (ST) vorhanden ist, die einen Systemspeicher (SPE) zur Speicherung von Programmodulen und unter anderem von verbindungsindividuellen Informationen und teilnehmerseitig einzugebenden Kennzeichnungsinformationen betreffenden Daten und wenigstens einen Systemprozessor (CPU) aufweist, dem unter Steuerung eines Betriebssystems (BS) die Programmodule zur Ausführung zugewiesen werden,
wobei durch einen Teilnehmer des Kommunikationssystems (KS) die vollständige Rufnummer eines externen Teilnehmers zusammen mit einem das Endgerät (FE1) des Teilnehmers des Kommunikationssystems bestimmenden Kennzeichen eingebbar sind, die gemeinsam in einem Speicherbereich (FL) des Systemspeichers eingeschrieben werden,
wobei bei jedem ankommenden externen Verbindungswunsch, in dessen Folge die vollständige Rufnummerninformation des betreffenden Endgerätes (Ex) des externen Teilnehmers automatisch zu dem Kommunikationssystem (KS) übermittelt wird, der Speicherbereich daraufhin überprüft wird, ob diese Rufnummer darin enthalten ist, und
wobei bei einer dabei festgestellten Übereinstimmung durch ein in der Systemsteuerung (ST) implementiertes Ablaufprogramm die Verbindung nicht unmittelbar zum gewünschten Teilnehmer, sondern zu dem in Zuordnung zu der Rufnummerninformation durch das gespeicherte Kennzeichen bestimmten Endgerät (FE1) aufgebaut wird.

2. Verfahren nach Anspruch 1,
**dadurch gekennzeichnet,**
**daß** bei einer Nichtannahme durch diesen begünstigten Teilnehmer unmittelbar anschließend eine Verbindung zum ursprünglichen, aus der empfangenen Wahlzifferninformation bestimmten und entsprechend abgespeicherten Endgerät (FE2) des gewünschten Teilnehmer hergestellt wird.

3. Verfahren nach Anspruch 1,
**dadurch gekennzeichnet,**
**daß** durch ein in der Systemsteuerung (ST) implementiertes Ablaufprogramm bewirkt wird, daß die Verbindungsaufbauprozedur zum Endgerät (FE1) des begünstigten Teilnehmers im Sinne einer bereits implementierten Verbindungsprozedur, z.B. einer Umleitungsprozedur oder einer Rückrufprozedur,vorgenommen wird.

4. Verfahren nach Anspruch 1,
**dadurch gekennzeichnet,**
**daß** sowohl die übermittelte Rufnummerninformation des externen Teilnehmers (Ex) als auch eine Anschlußadresse oder Wahlinformationen des Endgerätes (FE2) des ursprünglich gewünschten internen Zielteilnehmers nach einer entsprechend vorgenommenen Bewertung zusätzlich in Zuordnung zu dieser Rufnummerninformation des externen Teilnehmers in einen definierten Speicherbereich eingeschrieben wird, so dass entweder automatisch oder durch einen entsprechenden Teilnehmerauftrag eine Verbindung des externen Teilnehmers zum ursprünglich gewünschten Zielteilnehmer herstellbar ist.

5. Verfahren nach Anspruch 3,
**dadurch gekennzeichnet,**
**daß** die Verbindungsaufbauprozedur zum ursprünglichen Zielteilnehmer im Sinne eines Rückrufes dadurch bewirkt wird, daß Anschlußadressen des internen Zielteilnehmers und einer jeweils belegten externen Leitung (AL) als die Adressen eines rufenden und eines rückrufenden Teilnehmers der Programmsteuerung (PS) für die Realisierung von Rückrufprozeduren übergeben werden.

6. Verfahren nach einem der Ansprüche 3 bis 5,
**dadurch gekennzeichnet,**
**daß** nach der zwangsweise zugeteilten Gesprächsverbindung zu dem Endgerät (FE1) des begünstigten Teilnehmers nach Beendigung dieses Gespräches eine belegte Leitung zum externen Teilnehmer (Ex) in den Haltezustand überführt wird und weiterhin automatisch eine Verbindung zu dem ursprünglichen Zielteilnehmer aufgebaut und mit dessen Meldeinformation die Verbindung zu dem externen Teilnehmer (Ex) durchgeschaltet wird.

7. Verfahren nach Anspruch 1,
**dadurch gekennzeichnet,**
**daß** die Verbindung zum Endgerät (FE2) des ursprünglich gewünschten Zielteilnehmers nach Beendigung der zwangsweise zugeteilten Gesprächsverbindung durch den begünstigten Teilnehmer im Rahmen einer Gesprächsübergabe durch diesen Teilnehmer vermittelt wird.

8. Verfahren nach Anspruch 1,
**dadurch gekennzeichnet,**
**daß** nach Beendigung der Gesprächsverbindung zwischen dem externen Teilnehmer und dem begünstigten Teilnehmer nach der anschließenden Herstellung der Verbindung zwischen dem externen Teilnehmer und dem ursprünglichen Zielteilnehmer die diesbezüglich gespeicherten Daten gelöscht werden.

9. Verfahren nach Anspruch 1,
**dadurch gekennzeichnet,**
**daß** die Rufnummer des externen Teilnehmers und die Rufnummer des gewünschten Zielteilnehmers auf dem Display der begünstigten Teilnehmerstelle angezeigt wird.

10. Verfahren nach Anspruch 1,
**dadurch gekennzeichnet,**
**daß** die Einspeicherung der Rufnummer eines externen Teilnehmers durch einen internen Teilnehmer durch die Einwahl einer vorgegebenen Kennzahl bzw. Kennzahlenkombination oder durch die Betätigung einer Funktionstaste eingeleitet wird.

11. Verfahren nach Anspruch 1,
**dadurch gekennzeichnet,**
**daß** in den Fällen, in denen eine Gesprächsverbindung mit dem begünstigten Endgerät (FE1) nicht zustande kommt , durch ein in der Systemsteuerung implementiertes Ablaufprogramm bewirkt wird, daß eine Verbindung zu einem Sprachspeichersystem erfolgt, daß eine in dieses Sprachspeichersystem vorab selektiv für den bestimmten externen Teilnehmer durch den internen begünstigten Teilnehmer eingespeicherte Sprachnachricht bei einem ankommenden Ruf dieses bestimmten externen Teilnehmers ausspeicherbar und diesem übermittelbar ist.

12. Verfahren nach Anspruch 11,
**dadurch gekennzeichnet,**
**daß** im Sprachspeichersystem durch einen Vergleich der übermittelten Rufnummerninformation des externen Teilnehmers mit an Sprachnachrichten gekoppelten Rufnummerninformationen die jeweils aktuelle Sprachnachricht ausgewählt wird, so daß bei einer festgestellten Übereinstimmung die gezielte individuelle Aussendung der durch die Kopplung vorbestimmten Sprachnachricht bewirkt wird.

## Claims

1. Method for a communication system (KS) for switching connected communication devices (FE1 .. Fex) to one another and to external communication terminals (Ex, Ey), in which there is a system controller (ST) which performs the call processing control and coordination and which has a system memory (SPE) for storing program modules and, among other things, connection-related information and data concerning identification information to be input by the subscriber and at least one system processor (CPU) which, under control of an operating system (BS), is assigned the program modules for execution,
wherein a subscriber of the communication system (KS) can enter the complete directory number of an external subscriber together with a code determining the terminal (FE1) of the subscriber of the communication system, which are jointly written into a memory area (FL) of the system memory,
wherein with each incoming external call attempt, in consequence of which the complete directory number information of the relevant terminal (Ex) of the external subscriber is automatically transferred to the communication system (KS), the memory area is checked to see whether it contains this directory number, and
wherein, if a correspondence is found during this process, an executive program implemented in the system controller (ST) sets up the connection not directly to the wanted subscriber but to the terminal (FE1) determined by the stored code in association with the directory number information.

2. Method according to Claim 1, **characterized in that** if the call is not accepted by this prioritized subscriber, a connection to the original terminal (FE2) of the wanted subscriber determined from the received dialling digit information and correspondingly stored is established immediately thereafter.

3. Method according to Claim 1, **characterized in that** an executive program implemented in the system controller (ST) causes the connection set-up procedure to the terminal (FE1) of the prioritized subscriber to be performed in the sense of a connection procedure already implemented, e.g. a diversion procedure or a call-back procedure.

4. Method according to Claim 1, **characterized in that** both the transmitted directory number information of the external subscriber (Ex) and a line address or dialling information of the terminal (FE2) of the originally wanted internal destination subscriber, after a correspondingly performed assessment, is additionally written into a defined memory area in correlation with this directory number information of the external subscriber so that a connection of the external subscriber to the originally wanted destination subscriber can be established either automatically or by a corresponding subscriber order.

5. Method according to Claim 3, **characterized in that** the connection set-up procedure to the original destination subscriber as a call back is effected by transferring line addresses of the internal destination subscriber and of an external line (AL) in each case occupied as the addresses of a calling subscriber and of a subscriber calling back to the program controller (PS) for implementing call-back procedures.

6. Method according to one of Claims 3 to 5, **characterized in that** after the mandatorily allocated call connection to the terminal (FE1) of the prioritized subscriber, after this call has ended, an occupied line to the external subscriber (Ex) is changed into the hold state and furthermore a connection to the original destination subscriber is set up automatically and, using his answering information, the connection is switched through to the external subscriber (Ex).

7. Method according to Claim 1, **characterized in that** the connection to the terminal (FE2) of the originally wanted destination subscriber, after the mandatorily allocated call connection has been ended by the prioritized subscriber, is switched during a call transferred by this subscriber.

8. Method according to Claim 1, **characterized in that** after the call connection between the external subscriber and the prioritized subscriber has ended and after the connection between the external subscriber and the original destination subscriber has been subsequently established, the data stored in this respect are deleted.

9. Method according to Claim 1, **characterized in that** the directory number of the external subscriber and the directory number of the wanted destination subscriber are displayed on the display of the prioritized subscriber station.

10. Method according to Claim 1, **characterized in that** the storing of the directory number of an external subscriber via an internal subscriber is initiated by dialling in a predetermined code or code combination or by operating a function key.

11. Method according to Claim 1, **characterized in that** in the cases in which a call connection to the prioritized terminal (FE1) is not established, an executive program implemented in the system controller causes a connection to be made to a voicemail system by a voice message, stored in this voicemail system by the internal prioritized subscriber in advance selectively for the particular external subscriber, being enabled to be extracted from memory and transmitted to him in the event of an incoming call of this particular external subscriber.

12. Method according to Claim 11, **characterized in that** in the voicemail system, the current voice message in each case is selected by comparing the transmitted directory number information of the external subscriber with directory number information coupled to voice messages, so that, if a match is found, the specific individual sending-out of the voice message predetermined by the coupling is effected.

## Revendications

1. Procédé pour un système de communication (KS) en vue de la commutation de terminaux de communication raccordés (FE1 à FEx) entre eux et avec des terminaux de communication externes (Ex, Ey), dans lequel il est prévu une commande de système (ST) qui met en oeuvre la coordination et la commande de technique de commutation et qui comporte une mémoire de système (SPE) pour la mémorisation de modules de programme et de données concernant entre autres des informations propres à la liaison et des informations d'identification à entrer du côté de l'abonné et au moins un processeur de système (CPU) auquel, sous le contrôle d'un système d'exploitation (BS), les modules de programme sont attribués pour être exécutés,
un abonné du système de communication (KS) peut entrer le numéro d'appel complet d'un abonné externe et un identificateur déterminant le terminal (FE1) de l'abonné du système de communication qui sont enregistrés ensemble dans une zone (FL) de la mémoire de système,
à chaque demande de liaison externe entrante, à la suite de laquelle l'information complète de numéro d'appel du terminal concerné (Ex) de l'abonné externe est transmise automatiquement au système de communication (KS), on vérifie dans la zone de mémoire si celle-ci contient ce numéro d'appel, et
lorsqu'une coïncidence est constatée, un programme séquentiel installé dans la commande de système (ST) établit la liaison non pas directement vers l'abonné souhaité mais vers le terminal (FE1) déterminé par l'identificateur mémorisé et en association avec l'information de numéro d'appel.

2. Procédé selon la revendication 1,
**caractérisé par le fait que**, lorsque cet abonné favorisé n'accepte pas l'appel, on établit immédiatement après cette constatation une liaison vers le terminal (FE2) initial, déterminé par l'information de sélection reçue et mémorisé en conséquence, de l'abonné souhaité.

3. Procédé selon la revendication 1,
**caractérisé par le fait qu'**un programme séquentiel installé dans la commande de système (ST) fait en sorte que la procédure d'établissement de liaison vers le terminal (FE1) de l'abonné favorisé soit effectuée dans le sens d'une procédure de liaison déjà installée, par exemple une procédure de renvoi ou une procédure de rappel.

4. Procédé selon la revendication 1,
**caractérisé par le fait qu'**aussi bien l'information de numéro d'appel transmise de l'abonné externe (Ex) qu'une adresse de raccordement ou des informations de sélection du terminal (FE2) de l'abonné destinataire interne initialement souhaité sont enregistrées dans une zone de mémoire définie, après une évaluation appropriée et en association avec cette information de numéro d'appel de l'abonné externe, de telle sorte qu'une liaison peut être établie de l'abonné externe vers l'abonné destinataire initialement souhaité soit automatiquement soit par une tâche d'abonné correspondante.

5. Procédé selon la revendication 3,
**caractérisé par le fait que** la procédure d'établissement de liaison vers l'abonné destinataire initial est déclenchée dans le sens d'un rappel **par le fait que** des adresses de raccordement de l'abonné destinataire interne et d'une ligne externe (AL) respectivement occupée sont transmises comme adresses d'un abonné appelant et d'un abonné rappelant à la commande de programme (PS) pour la réalisation de procédures de rappel.

6. Procédé selon l'une des revendications 3 à 5,
**caractérisé par le fait que**, après la liaison de conversation forcément attribuée vers le terminal (FE1) de l'abonné favorisé, après la fin de cette conversation, une ligne occupée vers l'abonné externe (Ex) est mise en état de garde, une liaison vers l'abonné destinataire initial est automatiquement établie et, avec l'information de signalisation, la liaison vers l'abonné externe (Ex) est interconnectée.

7. Procédé selon la revendication 1,
**caractérisé par le fait que** la liaison vers le terminal (FE2) de l'abonné destinataire initialement souhaité, après que l'abonné favorisé a mis fin à la liaison de conversation forcément attribuée, est commutée par cet abonné dans le cadre d'un transfert de communication.

8. Procédé selon la revendication 1,
**caractérisé par le fait que**, après la fin de la liaison de conversation entre l'abonné externe et l'abonné favorisé et après l'établissement consécutif de la liaison entre l'abonné externe et l'abonné destinataire initial, les données mémorisées à ce sujet sont effacées.

9. Procédé selon la revendication 1,
**caractérisé par le fait que** le numéro d'appel de l'abonné externe et le numéro d'appel de l'abonné destinataire souhaité sont affichés sur le dispositif d'affichage du poste d'abonné favorisé.

10. Procédé selon la revendication 1,
**caractérisé par le fait que** la mémorisation du numéro d'appel d'un abonné externe est déclenchée par un abonné interne par la composition d'un indicatif prédéterminé ou d'une combinaison d'indicatifs prédéterminée ou par l'actionnement d'une touche de fonction.

11. Procédé selon la revendication 1,
**caractérisé par le fait que**, si une liaison de conversation avec le terminal favorisé (FE1) ne se produit pas, un programme séquentiel installé dans la commande de système fait qu'une liaison vers un système de mémoire vocale s'effectue, qu'un message vocal préalablement mémorisé sélectivement par l'abonné interne favorisé dans ce système de mémoire vocale pour l'abonné externe déterminé peut être lu lors d'un appel entrant de cet abonné externe déterminé et être transmis à ce dernier.

12. Procédé selon la revendication 11,
**caractérisé par le fait que**, dans le système de mémoire vocale, par une comparaison de l'information de numéro d'appel transmise de l'abonné externe avec des informations de numéro d'appel couplées à des messages vocaux, le message vocal respectivement actuel est sélectionné de telle sorte que, lorsqu'une coïncidence est constatée, l'émission individuelle ciblée du message vocal prédéterminé par le couplage est provoquée.
